# EUROPEAN PATENT APPLICATION

(11) **EP 2 400 328 A1**
(43) Date of publication of application: **28.12.2011**
(21) Application number: 11170540.6
(22) Date of filing: 20.06.2011
(51) Int. Cl.: G02B 6/44, H02G 3/08

(54) **Apparatus for handling data conductors**

(30) Priority: 22.06.2010 DE 202010009384 U
(71) Applicant: CCS Technology, Inc., Wilmington, DE 19803 (US)
(72) Inventor: Matthies, Jürgen, Dipl.-Ing., 58300 Wetter (DE); Fabrykowski, Grzegorz, Dipl.-Ing., 95-010 Gmina Strykow (PL)
(74) Representative: Sturm, Christoph

(57) **Abstract**

Apparatus for handling data conductors, in particular optical waveguides, and junction points between data conductors, in particular between optical waveguides, having a housing (11) and having assemblies, which are accommodated in the housing (11), for connecting and/or laying data conductors, it being possible to insert data conductors in an interior space, which is defined by the housing, and to guide data conductors out of the said interior space by means of at least one side wall (14) of the housing, specifically by means of openings (15) made in the side wall, whereby at least one opening (15), by means of which data conductors can be inserted into the interior space and guided out of the said interior space, is defined on at least one side wall (14) of the housing (11) by a section (18) of the side wall which can be broken out of the side wall (14), specifically in such a way that, in order to provide a relatively small opening, a first, inner subsection (19) with a relatively small outer contour can be broken out of the side wall (14), and in that, in order to provide a relatively large opening, a second, outer subsection (20) with a relatively large outer contour can additionally be broken out of the side wall (14).

## Description

The present invention relates to an apparatus for handling data conductors, in particular optical waveguides, and junction points between data conductors, in particular between optical waveguides, according to the preamble of Claim 1.

When designing, for example, optical waveguide cable networks, apparatuses for handling optical waveguides and junction points between optical waveguides are required to ensure structured wiring. One requirement made of such apparatuses is maximum population of said apparatuses together with a high packing density and simultaneous, low mechanical loading on the optical waveguides. Similar requirements are also made in the case of designing networks comprising copper conductors or other data conductors.

The product catalogue "Zubehör für LWL-Kabelnetze [Accessories for optical waveguide cable networks], pages 182-187, edition 1, Corning Cable Systems GmbH & Co KG, year 2001" has already disclosed an apparatus, which is in the form of a wall-mounted distribution device, for handling optical waveguides and junction points between optical waveguides, the said apparatus comprising a housing and assemblies, which are accommodated in the housing, for connecting and/or laying data conductors, it being possible to insert data conductors into an interior space, which is defined by the housing, and to guide data conductors out of the said interior space by means of at least one side wall of the housing, specifically by means of openings made in the side wall.

In this case, these openings for inserting data conductors and guiding data conductors out have a fixed size and therefore cannot be matched to different intended applications or uses.

Taking this as a starting point, the present invention is based on the problem of providing a novel apparatus for handling data conductors and junction points between data conductors.

This problem is solved by an apparatus having the features of Claim 1.

According to the invention, at least one opening, by means of which data conductors can be inserted into the interior space and guided out of the said interior space, is defined on at least one side wall of the housing by a section of the side wall which can be broken out of the side wall, specifically in such a way that, in order to provide a relatively small opening, a first, inner subsection with a relatively small outer contour can be broken out of the side wall, and that, in order to provide a relatively large opening, a second, outer subsection with a relatively large outer contour can additionally be broken out of the side wall.

For the purposes of the present invention, it is proposed that at least one opening in at least one side wall of the housing of the apparatus according to the invention for handling data conductors is defined by a section which can be broken out of the side wall, with this section which can be broken out of the side wall comprising a first, inner subsection with a relatively small outer contour, and a second, outer subsection with a relatively large outer contour. It is possible to either break only the first, inner subsection with the relatively small outer contour out of the side wall or to break the first, inner subsection together with the second, outer subsection out of the side wall, in order to thus form a relatively small opening in the side wall in the first case and to form a relatively large opening in the side wall in the second case.

In the process, the openings of different sizes are matched to different intended applications and uses. For example, in particular, the relatively small openings serve to insert data conductors and to guide data conductors out by means of data cables, while the relatively large openings serve to accommodate plug-type connectors between data cables and therefore to insert data conductors by means of plug-type connectors and to guide data conductors out by means of plug-type connectors.

By virtue of the invention, it is possible to individually match the apparatus for handling data conductors to different intended applications and uses with little expenditure.

Preferred developments of the invention can be gathered from the dependent claims and the following description. An exemplary embodiment is explained in greater detail with reference to the drawing, in which:
- Fig. 1:: shows a perspective view of an apparatus according to the invention, which is in the form of a wall-mounted distribution device, for handling data conductors and junction points between data conductors, together with data conductors which are inserted by means of a side wall of the apparatus into the said apparatus by means of data cables and plug-type connectors;
- Fig. 2:: shows the apparatus according to the invention from Fig. 1 without the cables and plug-type connectors;
- Fig. 3:: shows a view of a side wall of the apparatus according to the invention from Fig. 1 in a first state of the said side wall; and
- Fig. 4:: shows a view of the side wall from Fig. 3 in a second state of the said side wall.

The present invention relates to an apparatus for handling data conductors, in particular for handling optical waveguides, and for handling junction points between data conductors, in particular for handling junction points between optical waveguides.

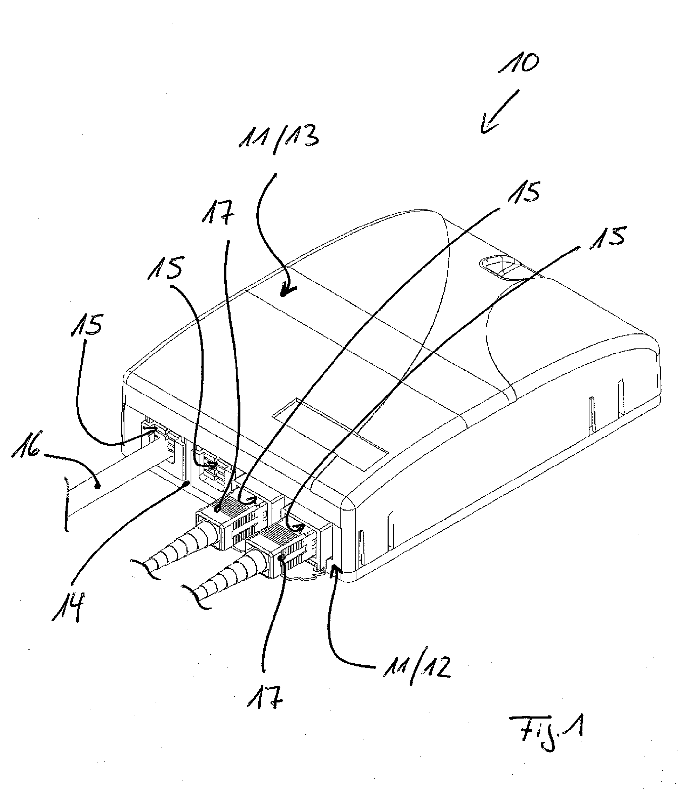

The invention will be described in greater detail below with reference to Figs 1 to 3, with Figs 1 to 3 showing different views of an apparatus 10, which is in the form of a wall-mounted distribution device, for handling data conductors and junction points between data conductors.

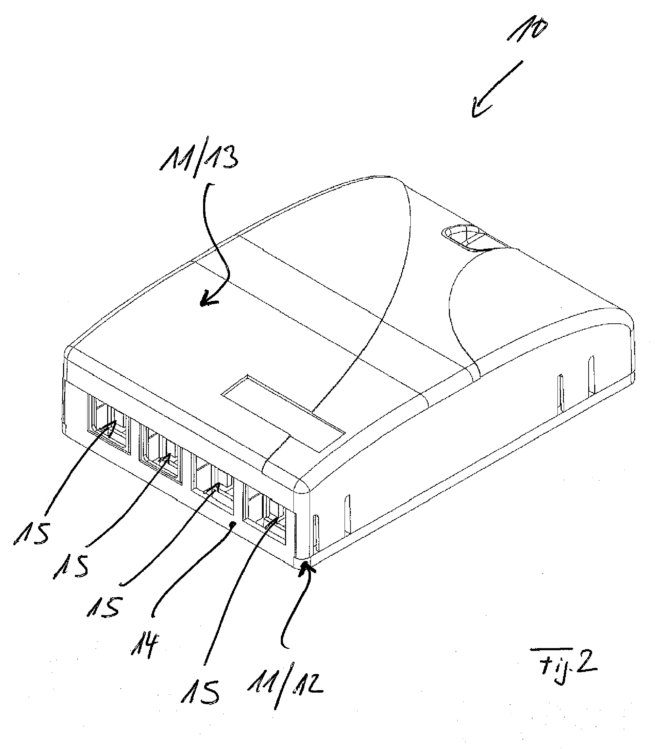

An apparatus 10 according to the invention for handling data conductors and junction points between data conductors comprises a housing 11, with the housing 11 being formed, in the exemplary embodiment of Figs 1 and 2, by a first housing part 12 and a second housing part 13. The first housing part 12 and the second housing part 13 of the housing 11 together define an interior space of the apparatus 10, with assemblies for connecting and/or laying data conductors being positioned in the interior space. The first housing part 12 is also without limitation to its orientation called housing lower part 12 and the second housing part 13 is also without limitation to its orientation called housing upper part 13.

When data conductors in the form of optical waveguides are to be handled, these assemblies may be, for example, splice cassettes and excess-length storage means.

Data conductors are inserted into the interior space which is defined by the housing 11 and routed out of the said interior space by means of at least one side wall of the housing 11, specifically by means of at least one side wall 14 of the housing lower part 12 in the shown exemplary embodiment of Figs 1 to 4, and to be precise by means of openings 15 made in the respective side wall 14. Figs 1 to 4 show a side wall 14 of the housing lower part 12, in which side wall four such openings 15 are made. The housing 11 can comprise further such openings, for example on a side wall which is situated opposite the side wall 14 of the housing lower part 12.

As can be gathered from Fig. 1, two openings 15 in the side wall 14 of the housing lower part 12 of the housing 11 of the apparatus 10 according to the invention serve to insert data conductors into the housing 11 or the interior space, which is defined by the housing 11, by means of cables 16, with the data conductors being guided in the cables 16. In Fig. 1, these openings 15 are the two left-hand openings.

The two right-hand openings 15 in the side wall 14 of the housing lower part 12 of the housing 11 of the apparatus 10 according to the invention serve, in contrast, to accommodate plug-type connectors 17 in order to thus insert data conductors, which are guided in data cables, into the apparatus 10 and to guide the said data conductors out of the said apparatus by means of the plug-type connectors 17 so as to form junction points in the region of the side wall 14.

For the purposes of the present invention, at least one opening 15 in at least one side wall 14 of the housing 11 of the apparatus 10 according to the invention is defined by a section 18 of the side wall 14 which can be broken out of the side wall 14, specifically by a first, inner subsection 19 and a second, outer subsection 20. The first, inner subsection 19 has a relatively small outer contour, it being possible to break the first, inner subsection 19 out of the respective side wall 14 in order to provide a relatively small opening 15. The second, outer subsection 20 of the section 18 has a relatively large outer contour, it being possible to break the second, outer subsection 20 and the first, inner subsection 19 out of the side wall 14 of the housing 11 in order to provide a relatively large opening 15.

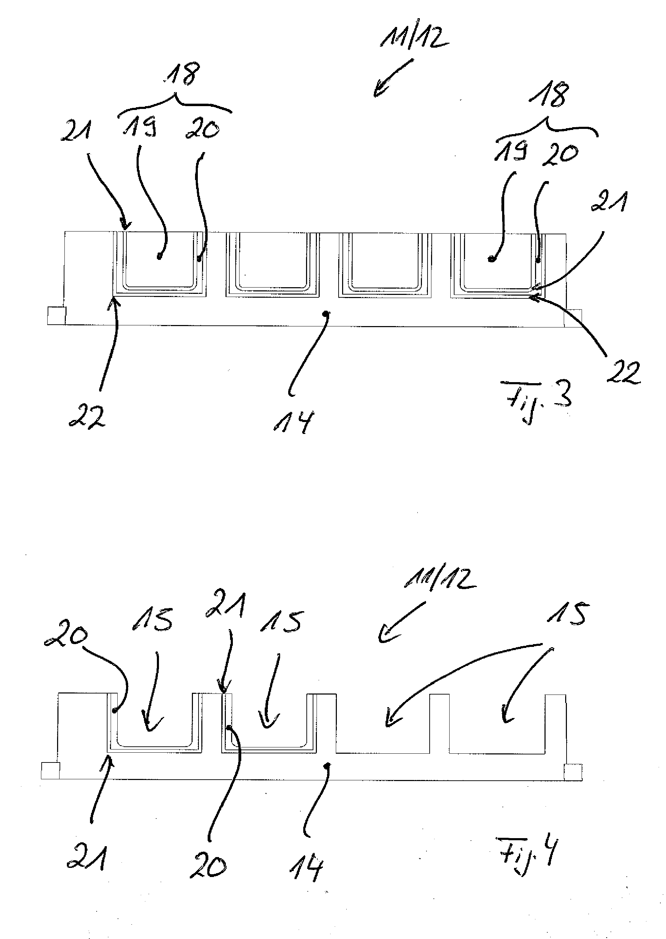

Therefore, in Fig. 4, the two left-hand openings 15 are provided by in each case only the inner subsections 19 of the respective sections 18 being broken out of the side wall 14 of the housing lower part 12 of the housing 11. These openings 15 with relatively small dimensions serve, as already mentioned, to guide the data cables 16. In contrast, in order to provide the two right-hand openings 15, the two subsections 19, 20 of the respective sections 18 are broken out of the side wall 14 of the housing lower part 12 of the housing 11, with, as already mentioned, the relatively large openings 15 serving to accommodate and handle the plug-type connectors 17.

As can best be seen in Fig. 3, the second, outer subsection 20 of each section 18 which can be broken out of the side wall 14 externally surrounds at least sections of the first, inner subsection 19 of the said section in the state in which the subsections are not broken out of the side wall 14, specifically on three sides according to Fig. 3. In this state in which the subsections are not broken out of the side wall 14 of the housing 11, the second, outer subsection 20 is connected both to the first inner subsection 19 and to the side wall 14 by means of predetermined breaking points 21, 22 in the region of each section 18. In this case the predetermined breaking points 21 are formed between the first, inner subsection 19 and the second, outer subsection 20 of the respective section 18 which can be broken out of the side wall 14 of the housing 11. In contrast, the predetermined breaking points 22 run between the side wall 14 and the second, outer subsection 20 of the respective section 18 which can be broken out of the side wall 14.

As already mentioned, in order to provide a relatively small opening 15 (see the two left-hand openings 15 in Fig. 4), only the first, inner subsection 19 of the section 18 is in each case broken out of the side wall 14 by breaking the predetermined breaking points 21 out of the side wall 14, while the second, outer subsection 20 is or remains connected to the side wall 14. In this case, the respective second, outer section 20 accordingly remains connected to the side wall 14 by means of the predetermined breaking points 22, whereas the predetermined breaking points 21 between the first, inner subsection 19 and the second, outer subsection 20 are broken.

In order to provide relatively large openings (see the two right-hand openings 15 in Fig. 4), both the first, inner subsection 19 and the second, outer subsection 20 are broken out of the side wall 14 in the region of each opening 15. In this state, the predetermined breaking points 22 between the respective, second outer subsection 20 of the section 18 of the side wall 14 are accordingly broken.

Therefore, when a relatively small opening 15 is required in the region of the side wall 14, only the inner subsection 19 of a section 18 is broken out of the side wall 14. When a relatively large opening 15 is required in the region of the side wall 14, both subsections 19, 20 of a section 18 are broken out of the side wall 14. The predetermined breaking points 21, 22 serve to break the subsections 19, 20 out of the side wall 14.

The respective side wall 14 from which the subsections 19, 20 of the sections 18 can be broken is preferably produced from a plastic. The entire housing 11 of the apparatus 10 according to the invention is typically produced from plastic, that is to say both the housing lower part 12 and the housing upper part 13. It is also possible to produce only the housing lower part 12 from plastic and to form the housing upper part 13 from metal. In particular, those housing parts which have at least one section 18 which can be broken out of the side wall in the region of at least one side wall are produced from plastic.

The predetermined breaking points 21, 22 can be formed by a continuously uniform reduction in the wall thickness of the side wall 14 or by a section-by-section reduction in the wall thickness of the side wall 14 in the region of or along the predetermined breaking points 21, 22.

### List of reference symbols

- 10: Apparatus
- 11: Housing
- 12: Housing part
- 13: Housing part
- 14: Side wall
- 15: Opening
- 16: Cable
- 17: Plug-type connector
- 18: Section
- 19: Subsection
- 20: Subsection
- 21: Predetermined breaking point
- 22: Predetermined breaking point

## Claims

1. Apparatus for handling data conductors, in particular optical waveguides, and junction points between data conductors, in particular between optical waveguides, having a housing (11) and having assemblies, which are accommodated in the housing (11), for connecting and/or laying data conductors, it being possible to insert data conductors in an interior space, which is defined by the housing, and to guide data conductors out of the said interior space by means of at least one side wall (14) of the housing, specifically by means of openings (15) made in the side wall, **characterized in that** at least one opening (15), by means of which data conductors can be inserted into the interior space and guided out of the said interior space, is defined on at least one side wall (14) of the housing (11) by a section (18) of the side wall which can be broken out of the side wall (14), specifically in such a way that, in order to provide a relatively small opening, a first, inner subsection (19) with a relatively small outer contour can be broken out of the side wall (14), and **in that**, in order to provide a relatively large opening, a second, outer subsection (20) with a relatively large outer contour can additionally be broken out of the side wall (14).

2. Apparatus according to Claim 1, **characterized in that** the second, outer subsection (20) externally surrounds at least sections of the first, inner subsection (19) in a state in which the said subsections are not broken out of the side wall.

3. Apparatus according to Claim 1 or 2, characterized the second, outer subsection (20) surrounds the first, inner subsection (19) on three sides in the state in which the said subsections are not broken out of the side wall.

4. Apparatus according to Claim 3, **characterized in that**, in this state, the second, outer subsection (20) is connected both to the first, inner subsection (19) and to the side wall (14) by means of predetermined breaking points (21, 22).

5. Apparatus according to one of Claims 1 to 4, **characterized in that**, in order to provide a relatively small opening, only the first, inner subsection (19) is broken out of the side wall (14), while the second, outer subsection (20) is connected to the side wall (14).

6. Apparatus according to Claim 5, **characterized in that**, in this state, the second, outer subsection (20) is connected to the side wall (14) by means of predetermined breaking points (22), while predetermined breaking points (21) between the second, outer subsection (20) and the first, inner subsection (19) are broken.

7. Apparatus according to one of Claims 1 to 6, **characterized in that**, in order to provide a relatively large opening, both the first, inner subsection (19) and the second, outer subsection (20) are broken out of the side wall (14).

8. Apparatus according to Claim 9, **characterized in that**, in this state, predetermined breaking points (22) between the second, outer subsection (20) and the side wall (14) are broken.

9. Apparatus according to one of Claims 1 to 8, **characterized in that** the respective side wall (14) is produced from plastic.
